(19) Europäisches Patentamt
European Patent Office
Office européen des brevets

(11) **EP 4 692 216 A1**

(12) **EUROPEAN PATENT APPLICATION**
published in accordance with Art. 153(4) EPC

(43) Date of publication:
**11.02.2026  Bulletin 2026/07**

(21) Application number: **24780480.0**

(22) Date of filing: **27.03.2024**

(51) International Patent Classification (IPC):
**C08L 23/26** (2025.01)    **B32B 27/28** (2006.01)
**C08L 23/12** (2006.01)

(52) Cooperative Patent Classification (CPC):
(C-Sets available)
**C08J 5/18; B32B 7/12; B32B 27/08; B32B 27/18;
B32B 27/28; B32B 27/306; B32B 27/32;
C08L 29/04;** B32B 2270/00; B32B 2307/7376;
B32B 2439/02; C08J 2323/14; C08J 2329/04;
C08J 2423/14; C08J 2429/04;          (Cont.)

(86) International application number:
**PCT/JP2024/012297**

(87) International publication number:
**WO 2024/204378 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023  JP 2023051681**

(71) Applicant: **Mitsubishi Chemical Corporation
Tokyo 100-8251 (JP)**

(72) Inventor: **YAMAMOTO, Nobuyuki
Tokyo 100-8251 (JP)**

(74) Representative: **Hoffmann Eitle
Patent- und Rechtsanwälte PartmbB
Arabellastraße 30
81925 München (DE)**

(54) **RESIN COMPOSITION, MOLDED BODY, SHEET, FILM, BOTTLE, TUBE, CONTAINER, MULTILAYER STRUCTURE, AND METHOD FOR PRODUCING RESIN COMPOSITION**

(57)     Provided is a resin composition comprising an ethylene-vinyl alcohol copolymer and a polypropylene resin having excellent thermal stability. The resin composition comprises an ethylene-vinyl alcohol copolymer (A) and a carbon-14-containing polypropylene resin (B).

EP 4 692 216 A1

(52) Cooperative Patent Classification (CPC): (Cont.)
C08L 2203/10; C08L 2203/16

C-Sets
**C08L 29/04, C08L 23/10**

**Description**

Technical Field

The present disclosure relates to a resin composition comprising an ethylene-vinyl alcohol copolymer and a carbon-14 containing polypropylene resin. The present disclosure also relates to a molded body, a sheet, a film, a bottle, a tube, and a container, each containing the resin composition, and a multilayer structure including a layer containing the resin composition, and to a method for producing the resin composition.

Background Art

Ethylene-vinyl alcohol copolymers (hereinafter, referred to as "EVOH"), because of having excellent gas barrier properties and transparency, have been mainly used as food packaging materials in the art. The sheet, film, and the like used as a food packaging material can be produced from the EVOH alone, but the EVOH may also be blended with another thermoplastic resin to improve physical properties and the like, or the sheet, film, and the like may be used by being formed into a multilayer structure in which layers made of a polyolefin resin and the like are laminated in order to impart other functions.

For example, incorporating two types of polypropylenes having different physical properties into an EVOH resin composition at specific ratios has been proposed to improve the flexibility of a film or the like made of EVOH (see JP 2022-34771 A).

In addition, in order to improve the gas barrier properties of a film or the like made of EVOH, dispersing EVOH as a layer having a specific shape into polypropylene has been proposed (see JP 2016-150949 A ).

Citation List

Patent Literature

JP 2022-34771 A
JP 2016-150949 A

Summary

Technical Problem

However, such an EVOH resin composition containing polypropylene for modification tends to be inferior in thermal stability in comparison to a resin composition consisting only of EVOH, and therefore further improvements are required.

Thus, an object of the present disclosure is to provide an EVOH resin composition comprising polypropylene and having excellent thermal stability.

Solution to Problem

In view of the above circumstances, the present inventors discovered that the above problems can be solved by using, in place of polypropylene, a carbon-14-containing polypropylene resin.

That is, the present disclosure provides the following aspects.

[1] A resin composition comprising an EVOH (A) and a carbon-14-containing polypropylene resin (B).

[2] The resin composition according to [1], wherein a mass ratio [(A)/(B)] of the EVOH (A) to the carbon-14-containing polypropylene resin (B) is from 10/90 to 99/1.

[3] The resin composition according to [1] or [2], wherein a content of the EVOH (A) is from 10 to 99 mass% in relation to a total amount of the resin composition.

[4] The resin composition according to any one of [1] to [3], wherein a content of the carbon-14-containing polypropylene resin (B) is from 1 to 90 mass% in relation to the total amount of the resin composition.

[5] A molded body containing the resin composition according to any one of [1] to [4].

[6] A sheet comprising the resin composition according to any one of [1] to [4].

[7] A film comprising the resin composition according to any one of [1] to [4].

[8] A bottle comprising the resin composition according to any one of [1] to [4].

[9] A tube comprising the resin composition according to any one of [1] to [4].

[10] A container comprising the resin composition according to any one of [1] to [4].

[11] A multilayer structure comprising a layer comprising the resin composition according to any one of [1] to [4].

[12] A method for producing a resin composition, the method comprising mixing an EVOH (A) and a carbon-14-containing polypropylene resin (B).

Advantageous Effects of Disclosure

The resin composition of the present disclosure is excellent in thermal stability. Therefore, the resin composition of the present disclosure can be suitably used as a raw material for a molded body or a multilayer structure.

The reason why the resin composition of the present disclosure is excellent in thermal stability is presumably that, compared to a petroleum-derived polypropylene resin containing no carbon-14, the carbon-14-containing polypropylene resin exhibits stronger binding energy due to the primary isotope effect, leading to slowed decomposition and increased thermal stability.

Description of Embodiments

Hereinafter, the present disclosure will be described in detail based on embodiments of the present disclosure, but the present disclosure is not limited by these embodiments.

In the present specification, unless otherwise specified, the expression "from X to Y" (with X and Y being any numbers) includes the meaning of "X or greater and Y or less" as well as the meaning of "preferably greater than X" or "preferably smaller than Y".

In addition, when the expression "X or greater " (X being any number) or "Y or less" (Y being any number) is used, the expression also includes the meaning of "preferably greater than X" or "preferably less than Y".

Furthermore, "X and/or Y (X and Y being any configurations)" means at least one of X or Y, and means the three cases of only X, only Y, and both X and Y.

For numerical ranges described in steps in the present description, the upper or lower limit of the numerical range for one step can be arbitrarily combined with the upper or lower limit of the numerical range for another step. The upper or lower limit of the numerical range described in the present description may be replaced by any values shown in the examples.

In addition, in the present specification, the term "film" means to include a "tape" and a "sheet".

In the present specification, the term "main component" means a component that significantly affects the properties of a target, and the content of the component in the target is usually 50 mass% or greater, preferably 55 mass% or greater, more preferably 60 mass% or greater, and still more preferably 70 mass% or greater, and may be 100 mass%.

A resin composition according to an example of an embodiment of the present disclosure (hereinafter, referred to as the "present resin composition") comprises an EVOH (A) and a carbon-14-containing polypropylene resin (B).

Hereinafter, each component will be described.

EVOH (A)

The EVOH (A) is usually a resin that is produced by saponification of an ethylene-vinyl ester copolymer, which is a copolymer of ethylene and a vinyl ester monomer, and is a water-insoluble thermoplastic resin.

Polymerization of ethylene and the vinyl ester monomer can be carried out by any known polymerization method, such as, for example, solution polymerization, suspension polymerization, or emulsion polymerization, but solution polymerization using methanol as a solvent is generally used. Saponification of the resulting ethylene-vinyl ester copolymer can also be carried out by a known method.

The EVOH (A) thus produced is mainly composed of an ethylenederived structural unit and a vinyl alcohol structural unit, and usually contains a small amount of a vinyl ester structural unit that remains without being saponified.

As the vinyl ester monomer, vinyl acetate is typically used from the viewpoint of good market availability and good impurity treatment efficiency during production. Examples of other vinyl ester monomers besides the vinyl acetate described above include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester having usually from 3 to 20 carbons, preferably from 4 to 10 carbons, or particularly preferably from 4 to 7 carbons can be used. One of these may be used alone or two or more thereof may be used in combination.

The ethylene content in the EVOH (A) can be controlled by the pressure of ethylene when the vinyl ester monomer and ethylene are copolymerized, and is from 20 to 60 mol%. The ethylene content is preferably from 25 to 50 mol%, and particularly preferably from 25 to 35 mol%. When the content of the EVOH is too low, the gas barrier properties and melt moldability under high humidity conditions tend to decrease, and conversely, when the content of the EVOH is too high, the gas barrier properties tend to decrease.

The ethylene content thereof can be measured based on, for example, ISO 14663.

The degree of saponification of the vinyl ester component in the EVOH (A) can be controlled by factors such as the amount of a saponification catalyst (usually, an alkaline catalyst such as sodium hydroxide is used), the temperature, and the time when saponifying the ethylene-vinyl ester copolymer, and the degree of saponification is usually from 90 to 100 mol%, preferably from 95 to 100 mol%, and particularly preferably from 99 to 100 mol%. When the degree of saponification is too low, properties such as the gas barrier properties, thermal stability, and moisture resistance tend to be reduced.

The degree of saponification of the EVOH (A) can be measured based on JIS K6726 (provided that the EVOH is used in the form of a solution with the EVOH uniformly dissolved in a water-methanol solvent).

The melt flow rate (MFR) (at 210°C and a load of 2160 g) of the EVOH (A) is usually from 0.5 to 100 g/10 minutes, preferably from 1 to 50 g/10 minutes, and particularly preferably from 3 to 35 g/10 minutes. When the MFR is too high, the film-forming property tends to be unstable, and when the MFR is too low, the viscosity tends to be too high, resulting in difficulty in carrying out melt extrusion. The MFR is an index of the degree of polymerization of the EVOH, and can be adjusted by the amount of a polymerization initiator or the amount of a solvent when ethylene and a vinyl ester monomer are copolymerized.

Moreover, the EVOH (A) may further contain, within a range that does not impair the effects of the present disclosure (for example, 10 mol% or less of the EVOH), a structural unit derived from a comonomer described below.

Examples of the comonomer include olefins such as propylene, 1-butene, and isobutene; hydroxyl group-containing α-olefins such as 3-buten-1-ol, 3-butene-1,2-diol, 4-penten-1-ol, and 5-hexene-1,2-diol, and derivatives thereof such as esterified products and acylated products thereof; hydroxyalkyl vinylidenes such as 2-methylenepropane-1,3-diol and 3-methylenepentane-1,5-diol; hydroxyalkyl vinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts thereof, or mono- or dialkyl esters thereof having an alkyl group with 1 to 18 carbons; acrylamides such as acrylamide, N-alkylacrylamides having an alkyl group with 1 to 18 carbons, N,N-dimethylacrylamide, 2-acrylamidopropane sulfonic acid or salts thereof, and acrylamidopropyldimethylamine or acid salts thereof, or quaternary salts thereof; methacrylamides such as methacrylamide, N-alkylmethacrylamides having an alkyl group with 1 to 18 carbons, N,N-dimethylmethacrylamide, 2-methacrylamidopropane sulfonic acid or salts thereof, and methacrylamidopropyldimethylamine or acid salts thereof, or quaternary salts thereof; N-vinylamides such as N-vinylpyrrolidone, N-vinylformamide, and N-vinylacetamide; vinyl cyanides such as acrylonitrile and methacrylonitrile; vinyl ethers having an alkyl group with 1 to 18 carbons, such as alkyl vinyl ethers, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silanes such as trimethoxyvinylsilane; halogenated allyl compounds such as allyl acetate and allyl chloride; allyl alcohols such as allyl alcohol and dimethoxyallyl alcohol; and comonomers such as trimethyl-(3-acrylamido-3-dimethylpropyl)-ammonium chloride and acrylamido-2-methylpropane sulfonic acid. One of these may be used alone or two or more thereof may be used in combination.

In particular, an EVOH obtained by copolymerization of a hydroxyl group-containing α-olefin, that is, an EVOH having a primary hydroxyl group in a side chain, is preferable in that secondary moldability is improved while maintaining gas barrier properties, and among these, an EVOH having a 1,2-diol structure in a side chain is preferable.

When the EVOH is one having a primary hydroxyl group in a side chain, the content of the structural unit derived from the monomer having a primary hydroxyl group is usually from 0.1 to 20 mol%, preferably from 0.5 to 15 mol%, and particularly preferably from 1 to 10 mol%.

Further, the EVOH (A) used in the present embodiment may be an EVOH that has been subjected to a "post-modification" treatment such as urethanization, acetalization, cyanoethylation, or oxyalkylenation.

Moreover, the EVOH (A) used in the present embodiment may be a mixture of two or more types of EVOH (A), such as, for example, EVOH having different ethylene contents, EVOH having different degrees of saponification, EVOH having different degrees of polymerization, and EVOH having different copolymerization components.

The content of the EVOH (A) in the present resin composition is usually 1 mass% or greater, preferably from 10 to 99 mass%, more preferably from 30 to 95 mass%, and still more preferably from 50 to 90 mass%, in relation to the total amount of the resin composition. When the content value is within the above range, the effects of the present disclosure tend to be more effectively obtained.

Carbon-14-Containing Polypropylene Resin (B)

The carbon-14-containing polypropylene resin (B) used in the present resin composition means a polypropylene resin produced by chemical or biological synthesis using a renewable biomass resource as a raw material. A characteristic of the carbon-14-containing polypropylene resin (B) is that due to the carbon neutrality of the biomass, even when incinerated, the carbon-14-containing polypropylene resin (B) does not increase the carbon dioxide concentration in the atmosphere.

As the carbon-14-containing polypropylene resin (B), a bio-propylene derived from a bio-propanol obtained from a plant raw material is preferably used. That is, the carbon-14-containing polypropylene resin (B) is preferably a plant-derived polypropylene resin.

A polypropylene resin derived from a plant (biomass resource) and a polypropylene resin derived from petroleum do not differ in physical properties such as molecular weight and mechanical properties. Therefore, in order to distinguish them, a biobased content is generally used. The carbon of petroleum-derived polypropylene resin does not include $^{14}$C (radioactive carbon-14, half-life of 5730 years), and thus the biobased content is an index of the content proportion of plant-derived bio-polypropylene resin and is obtained by measuring the concentration of $^{14}$C through accelerator mass spectrometry. Therefore, in the case of a film in which a plant-derived polypropylene resin is used, when the biobased content of the film is measured, a biobased content corresponding to the content of the plant-derived polypropylene resin is obtained. That is, the term carbon-14-containing polypropylene resin (B) means that the resin contains radioactive carbon ($^{14}$C).

The biobased content can be determined, for example, by heating and stirring the present resin composition in a mixed solvent of water and methanol to dissolve the EVOH (A), and then measuring the carbon-14 ($^{14}$C) content of the remaining polypropylene resin by the following method. A sample to be measured is combusted to generate carbon dioxide, and the carbon dioxide purified in a vacuum line is reduced with hydrogen using iron as a catalyst to thereby generate graphite. The graphite is then loaded into a tandem accelerator-based $^{14}$C-AMS dedicated device (available from NEC Corporation), the $^{14}$C is counted, the $^{13}$C concentration ($^{13}$C/$^{12}$C) and the $^{14}$C concentration ($^{14}$C/$^{12}$C) are measured, and the proportion of the $^{14}$C concentration of the sample carbon relative to standard modern carbon is calculated from the measured values to thereby determine the biobased content in accordance with ASTM D6866.

In addition, the above-described biobased content is also used to distinguish between a polypropylene resin derived from a plant (biomass resource) and a polypropylene resin derived from petroleum, and the measurement method is also as described above.

The content of carbon-14 contained in the carbon-14-containing polypropylene resin (B) is not particularly limited, but the proportion of carbon-14 to the total carbon of the carbon-14-containing polypropylene resin (B) is usually $1.0 \times 10^{-14}$ or greater, and is preferably $1.0 \times 10^{-13}$ or greater. The upper limit value is usually $1.2 \times 10^{-12}$.

The present resin composition contains the carbon-14-containing polypropylene resin (B), and therefore exhibits excellent thermal stability as compared with a resin composition containing a known petroleum-derived polypropylene resin. The reason for this is presumed to be that the carbon-14-containing polypropylene resin has a strong binding energy due to the primary isotope effect, leading to slowed decomposition and increased thermal stability.

The biobased content of the carbon-14-containing polypropylene resin (B) used in the present resin composition is usually from 1 to 99%, preferably from 5 to 95%, and particularly preferably from 10 to 90%. When the biobased content of the carbon-14-containing polypropylene resin (B) is within the above range, a resin composition having more excellent thermal stability can be obtained.

The type of "polypropylene" in the carbon-14-containing polypropylene resin (B) is not particularly limited, and may be a homo-polypropylene or a copolymer of propylene and a small amount of a comonomer. The form of the copolymer may be a block copolymer or a random copolymer. For example, a copolymer containing propylene and another α-olefin monomer of a mass fraction of less than 50%, or a copolymer containing propylene and a non-olefin monomer having a functional group and a mass fraction of 3% or less can be used.

Examples of the other α-olefin include ethylene, α-olefins having from 4 to 20 carbons, such as 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 4-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. One of these may be used alone or two or more thereof may be used in combination.

Moreover, examples of the non-olefin monomer include styrene monomers, diene monomers, cyclic monomers, and oxygen atom-containing monomers. One of these may be used alone or two or more thereof may be used in combination.

Examples of the styrene monomer include styrene, 4-methylstyrene, and 4-dimethylaminostyrene.

Examples of the diene monomer include 1,3-butadiene, 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, and dicyclooctadiene.

Examples of the cyclic monomer include methylene norbornene, 5-vinylnorbornene, 5-ethylidene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, 2-propenyl-2,2-norbornadiene, and cyclopentene.

Examples of the oxygen atom-containing monomer include hexenol, hexenoic acid, and methyl octenoate.

The other α-olefin and non-olefin monomers may be obtained using a renewable biomass resource as a raw material or using petroleum as a raw material. When a monomer obtained using a renewable biomass resource as a raw material is used, the biobased content of the final product can be further increased. In addition, in a case in which a monomer obtained using petroleum as a raw material is used, since a wide variety of such monomers can be procured, the physical properties and the like of the carbon-14-containing polypropylene resin (B) can be easily adjusted by producing the carbon-14-containing polypropylene resin (B) using these monomers.

As described above, the carbon-14-containing polypropylene resin (B) is obtained by homo-polymerization of propylene or by copolymerization of propylene and a comonomer, and the polymerization or copolymerization can be carried out according to a common method using a metallocene catalyst or a Ziegler-Natta catalyst. Among these, a metallocene catalyst is preferably used.

A single type of the carbon-14-containing polypropylene resin (B) may be used alone, or a combination of two or more types may be used, and among these, a homo-polypropylene derived from a bio-propylene, an ethylene-propylene block copolymer derived from a bio-propylene, an ethylene-propylene random copolymer derived from a bio-propylene, or an impact copolymer derived from a bio-propylene is suitably used from the viewpoints of moldability, handling ease, and thermal stability.

The melt flow rate (MFR) (at 230°C and a load of 2160 g) of the carbon-14 containing polypropylene resin (B) is usually from 0.1 to 100 g/10 minutes, preferably from 0.5 to 90 g/10 minutes, and particularly preferably from 2 to 80 g/10 minutes. When the MFR is too high, the film-forming property tends to be unstable, and when the MFR is too low, the viscosity tends to increase, resulting in difficulty in carrying out melt extrusion.

Examples of commercially available products of the carbon-14-containing polypropylene resin (B) suitably used in the present embodiment include HP640J available from LyondellBasell Industries Holdings B.V.

The content of the carbon-14-containing polypropylene resin (B) in the present resin composition is usually 0.5 mass% or greater, preferably from 1 to 90 mass%, more preferably from 5 to 70 mass%, and particularly preferably from 10 to 50 mass%, in relation to the total amount of the resin composition. By setting the content of the carbon-14-containing polypropylene resin (B) to be within the above range, a resin composition exhibiting more excellent thermal stability is obtained.

In the present resin composition, the mass ratio [(A)/(B)] of the EVOH (A) to the carbon-14-containing polypropylene resin (B) is usually from 10/90 to 99/1, preferably from 30/70 to 95/5, and more preferably from 50/50 to 90/10. When the mass ratio of the EVOH (A) to the carbon-14-containing polypropylene resin (B) is within the above range, a resin composition having more excellent thermal stability is obtained.

Moreover, in the present resin composition, the proportion of the total content of the EVOH (A) and the carbon-14-containing polypropylene resin (B) in the total amount of the resin composition is not particularly limited, but is usually 70 mass% or greater, preferably 80 mass% or greater, and more preferably 90 mass% or greater.

Other Components

According to various purposes, the present resin composition can be blended with, for example, a resin (for example, a petroleum-derived polypropylene resin or another type of resin) besides the EVOH (A) and the carbon-14-containing polypropylene resin (B), or with an optional additive (hereinafter, these other resins and optional additives are referred to as "other components"), within a range that does not significantly impair the effects of the present disclosure. A single type of these other components may be used alone, or two or more of types may be used in any combination and ratio.

Examples of the additives include an antioxidant, an ultraviolet absorber, a plasticizer, a lubricant, a filler, and an antistatic agent.

When the present resin composition contains "other components" described above, the total content thereof is usually 30 mass% or less, preferably 20 mass% or less, and more preferably 10 mass% or less, relative to the present resin composition.

Method for Producing Resin Composition

The present resin composition can be produced by mixing the EVOH (A) and the carbon-14-containing polypropylene resin (B), which are essential components, and the other components as necessary. Examples of the mixing method include known methods such as a dry blending method, a melt mixing method of obtaining a compound using a single-screw extruder or a twin-screw extruder, a solution mixing method, and an impregnation method, and these methods can be optionally combined.

Resin Composition

The present resin composition thus obtained is less likely to decompose under heating at a high temperature and exhibits excellent thermal stability, as compared with a known resin composition obtained by combining EVOH and petroleum-derived polypropylene.

The biobased content of the present resin composition can be determined, for example, by measuring the carbon-14 ($^{14}C$) content of the present resin composition using the following method. A sample to be measured is combusted to generate carbon dioxide, and the carbon dioxide purified in a vacuum line is reduced with hydrogen using iron as a catalyst to thereby generate graphite. The graphite is then loaded into a tandem accelerator-based $^{14}C$-AMS dedicated device (available from NEC Corporation), the $^{14}C$ is counted, the $^{13}C$ concentration ($^{13}C/^{12}C$) and the $^{14}C$ concentration ($^{14}C/^{12}C$) are measured, and the proportion of the $^{14}C$ concentration of the sample carbon relative to standard modern carbon is calculated from the measured values to thereby determine the biobased content in accordance with ASTM D6866.

The content of carbon-14 contained in the present resin composition is not particularly limited, but the proportion of carbon-14 to the total carbon of the resin composition is usually $1.0 \times 10^{-16}$ or greater, and preferably $1.0 \times 10^{-14}$ or greater. The upper limit value is usually $1.2 \times 10^{-12}$.

The biobased content of the present resin composition is usually from 0.01 to 99.99%, preferably from 0.1 to 99.9%, more preferably from 1 to 99%, further preferably from 1 to 90%, and particularly preferably from 10 to 90%, from 2 to 70%, or from 4 to 50%. By setting the biobased content of the resin composition to the above range, a resin composition having more excellent thermal stability can be obtained.

The melt flow rate (MFR) (at 210°C and a load of 2160 g) of the present resin composition is usually from 0.1 to 100 g/10 minutes, preferably from 0.5 to 90 g/10 minutes, and particularly preferably from 2 to 80 g/10 minutes.

The water content of the present resin composition is usually from 0.01 to 0.5 mass%, preferably from 0.02 to 0.35 mass%, and particularly preferably from 0.05 to 0.3 mass%.

The water content of the present resin composition is measured and calculated by the following method.

The mass ($W_1$) of the resin composition before drying is weighed with an electronic balance, after which the resin composition is dried in a hot air dryer at 150°C for 5 hours and then cooled in a desiccator for 30 minutes, and then the mass ($W_2$) after cooling is weighed. The water content is calculated from the following equation.

$$\text{Water content (mass\%)} = [(W_1 - W_2)/W_1] \times 100$$

The reduction temperature difference of the present resin composition is usually 10°C or greater, preferably 11°C or greater, more preferably 12°C or greater, and further preferably 13°C or greater.

This reduction temperature difference can be calculated by measuring, with a thermogravimetric analyzer (Pyris 1 TGA, available from PerkinElmer Inc.), each mass reduction percentage when the temperature is increased at 10°C/min under a nitrogen atmosphere, and then determining a value (reduction temperature difference) obtained by subtracting the temperature when a 5% mass reduction of the resin composition occurs from the temperature when a 10% mass reduction of the resin composition occurs. A higher value determined means that the decomposition of the resin composition is slower, and that the resin composition has excellent thermal stability.

The present resin composition is prepared as a resin composition in various forms such as pellets or a powder, and is provided as a material for various molded bodies and multilayer structures. As described above, the present resin composition exhibits excellent thermal stability, and therefore a molded body obtained using the present resin composition or a multilayer structure including a layer obtained using the present resin composition exhibits excellent quality. In particular, in the present embodiment, when the present resin composition is provided as a material for use in melt molding, the effects of the present disclosure tend to be more efficiently obtained, which is preferable.

Molded Body

A molded body according to an example of an embodiment of the present disclosure (hereinafter, referred to as "the present molded body") is produced by molding the present resin composition.

Examples of the shape of the present molded body include a film, a sheet, a tape, a cup, a tray, a tube, a bottle, a container, a pipe, a filament, an extruded article with an atypical cross-section, and various irregularly-shaped molded articles.

The method for molding the present resin composition is not particularly limited, and any molding method can be applied as long as the molding method is applicable to a general resin composition. Examples of the molding method include extrusion molding, blow molding, injection molding, and thermoforming.

Multilayer Structure

A multilayer structure according to an example of an embodiment of the present disclosure (hereinafter, referred to as "the present multilayer structure") includes at least one layer containing the present resin composition.

The present multilayer structure can be laminated with another substrate (hereinafter, referred to as a "substrate resin") containing a thermoplastic resin other than the present resin composition as a main component to thereby impart further strength or other functions.

Examples of the substrate resin include polyethylene resins such as linear low-density polyethylene, low-density polyethylene, ultra low-density polyethylene, medium-density polyethylene, high-density polyethylene, ethylene-propylene (block and random) copolymers, and ethylene-$\alpha$-olefin (an $\alpha$-olefin having from 4 to 20 carbons) copolymers; polypropylene resins such as polypropylene and propylene-$\alpha$-olefin (an $\alpha$-olefin having from 4 to 20 carbons) copolymers; polyolefin resins in a broad sense including (unmodified) polyolefin resins such as polybutene, polypentene, and polycyclic olefin resins (polymers having a cyclic olefin structure in the main chain and/or a side chain), and modified olefin resins such as unsaturated carboxylic acid-modified polyolefin resins in which any of the mentioned polyolefins is graftmodified with an unsaturated carboxylic acid or an ester thereof; an ionomer; an ethylene-vinyl acetate copolymer; an ethylene-acrylic acid copolymer; an ethylene-acrylate copolymer; a polyester resin; a polyamide resin (including copolymerized polyamide); polyvinyl chloride; polyvinylidene chloride; acrylic resin; polystyrene resin; a vinyl ester resin; a polyester elastomer; a polyurethane elastomer; a polystyrene elastomer; a halogenated polyolefin such as chlorinated polyethylene and chlorinated polypropylene; and aromatic or aliphatic polyketones.

Among these, in terms of economic efficiency and productivity, polyamide resins, polyolefin resins, polyester resins, and polystyrene resins are preferable, and polyolefin resins such as polyethylene resins, polypropylene resins, polycyclic olefin resins, and unsaturated carboxylic acid-modified polyolefin resins thereof are more preferable.

When the resin composition layers are denoted by a (a1, a2, ...) and the substrate resin layers are denoted by b (b1, b2, ...), the layer configuration of the present multilayer structure may be any combination such as a/b, b/a/b, a/b/a, a1/a2/b, a/b1/b2, b2/b1/a/b1/b2, or b2/b1/a/b1/a/b1/b2. In addition, a recycled layer containing a mixture of the present resin composition and a substrate resin and obtained by remelting and molding end portions, defective products, or the like generated in the process of manufacturing the multilayer structure may be provided. The cumulative total number of layers in the multilayer structure is usually from 2 to 15, and is preferably from 3 to 10. In the above layer configuration, an adhesive resin layer containing an adhesive resin may be interposed between the respective layers as necessary.

As the adhesive resin, a known adhesive resin can be used, and the adhesive resin may be appropriately selected according to the type of thermoplastic resin used for the substrate resin layer "b". Typical examples of the adhesive resin include carboxyl group-containing modified polyolefin polymers obtained by chemically bonding an unsaturated carboxylic acid or anhydride thereof to a polyolefin resin by addition reaction, a graft reaction, or the like. Examples of the carboxyl group-containing modified polyolefin polymer include modified polyethylene grafted with maleic anhydride, modified polypropylene grafted with maleic anhydride, a modified ethylene-propylene (block and random) copolymer grafted with maleic anhydride, a modified ethyleneethyl acrylate copolymer grafted with maleic anhydride, a modified ethylene-vinyl acetate copolymer grafted with maleic anhydride, a modified polycyclic olefin resin grafted with maleic anhydride, and a modified polyolefin resin grafted with maleic anhydride. One or a mixture of two or more selected from these may be used.

In the present multilayer structure, when an adhesive resin layer is used between the resin composition layer and the substrate resin layer, the adhesive resin layer is located on both sides of the resin composition layer, and therefore use of an adhesive resin having excellent hydrophobicity is preferable.

A known plasticizer, filler, clay (such as montmorillonite), colorant, antioxidant, antistatic agent, lubricant, nuclear material, anti-blocking agent, wax, or the like may be included in the substrate resin and adhesive resin within a range that does not impede the spirit of the present disclosure (for example, 30 mass% or less, and preferably 10 mass% or less in relation to the total amount of the resin).

The lamination of the present resin composition and the substrate resin (including a case of interposing an adhesive resin layer therebetween) can be carried out by a known method. Examples thereof include a method of melt-extrusion laminating the substrate resin to a film, a sheet, or the like of the present resin composition, a method of melt-extrusion laminating the present resin composition to the substrate resin layer, a method of co-extruding the resin composition and the substrate resin, a method of dry laminating the resin composition layer and the substrate resin layer using a known adhesive such as an organic titanium compound, an isocyanate compound, a polyester compound, or a polyurethane compound, and a method of applying a solution of the resin composition onto the substrate resin and then removing the solvent. Among these methods, the method of co-extruding the resin composition and the substrate resin is preferable from the viewpoints of cost and the environment.

The present multilayer structure may be subjected to a stretching treatment (with heating) as necessary. The stretching treatment may be either uniaxial stretching or biaxial stretching, and in the case of biaxial stretching, the stretching may be simultaneous stretching or sequential stretching. Among stretching methods such as a roll stretching method, a tenter stretching method, a tubular stretching method, a stretch blowing method, and a vacuum pressure forming method, a method having a high stretching ratio can also be employed. The stretching temperature, which is a temperature near the melting point of the multilayer structure, is usually selected from an approximate range of from 40 to 170°C and preferably from 60 to 160°C. When the stretching temperature is too low, the stretchability is poor, and when the stretching temperature is too high, maintaining a stable stretched state becomes difficult.

Note that thermal setting may be carried out after the stretching treatment for the purpose of imparting dimensional stability. The thermal setting can be carried out by a known means, such as, for example, subjecting the stretched film to a heat treatment at a temperature of usually from 80 to 180°C and preferably from 100 to 165°C for an approximate time of usually from 2 to 600 seconds while the stretched film is kept in a tensioned state. When the multilayer stretched film obtained from the present resin composition is used as a shrink film, the thermal setting is not carried out, and for example, a treatment such as cooling and setting by blowing cold air onto the stretched film may be carried out in order to impart heat shrinkability.

In some cases, the multilayer structure can be used to obtain a cup or tray-shaped multilayer container. In this case, a drawing method is usually employed, and specific examples thereof include a vacuum forming method, a pressure forming method, a vacuum pressure forming method, and a plug-assisted vacuum pressure forming method. Furthermore, in a case in which a multilayer container (laminate structure) is to be obtained in the form of a tube or bottle from a multilayer parison (a hollow tubular preform before blowing), a blow molding method is used. Specific examples thereof include extrusion blow molding methods (such as a twin-head type method, a mold moving type method, a parison shift type method, a rotary type method, an accumulator type method, and a horizontal parison type method), a cold parison type blow molding method, an injection blow molding method, and biaxial stretch blow molding methods (an extrusion type cold parison biaxial-stretch blow molding method, an injection type cold parison biaxial-stretch blow molding method, and an injection molding in-line type biaxial-stretch blow molding method). As necessary, the obtained laminate may be subjected to processes such as a heat treatment, a cooling treatment, rolling, printing, dry lamination, solution or melt coating, bag-making, deep drawing, box processing, tube processing, and splitting.

The thickness of the present multilayer structure (including a stretched multilayer structure), and the thicknesses of the resin composition layer, the substrate resin layer, and the adhesive resin layer constituting the multilayer structure cannot be generally defined by the layer configuration, the type of the substrate resin, the type of the adhesive resin, the application, the packaging form, the required physical properties, and the like, but the thickness of the multilayer structure (including a stretched multilayer structure) is usually from 10 to 5000 $\mu$m, preferably from 30 to 3000 $\mu$m, and particularly preferably from 50 to 2000 $\mu$m. The thickness of the resin composition layer is usually from 1 to 500 $\mu$m, preferably from 3 to 300 $\mu$m, and particularly preferably from 5 to 200 $\mu$m, the thickness of the substrate resin layer is usually from 5 to 3000 $\mu$m, preferably from 10 to 2000 $\mu$m, and particularly preferably from 20 to 1000 $\mu$m, and the thickness of the adhesive resin layer is usually from 0.5 to 250 $\mu$m, preferably from 1 to 150 $\mu$m, and particularly preferably from 3 to 100 $\mu$m.

Furthermore, the ratio of the thickness of the resin composition layer to the thickness of the substrate resin layer ((resin composition layer)/(substrate resin layer)) in the multilayer structure, in terms of a ratio of the thickest layers when each layer is present in a plurality, is usually from 1/99 to 50/50, preferably from 5/95 to 45/55, and particularly preferably from 10/90 to 40/60. Moreover, the thickness ratio of the resin composition layer to the adhesive resin layer ((resin composition layer)/(adhesive resin layer)) in the multilayer structure, in terms of a ratio of the thickest layers when each layer is present in a plurality, is usually from 10/90 to 99/1, preferably from 20/80 to 95/5, and particularly preferably from 50/50 to 90/10.

Bags made of the thus obtained film, sheet, and stretched film, and containers including cups, trays, tubes, bottles, or the like are useful as various packaging materials and containers for general food products, as well as for seasonings such as mayonnaise and dressings, fermented foods such as miso, oil and/or fat food products such as salad oils, beverages, cosmetics, and pharmaceuticals.

Examples

Hereinafter, the present disclosure will be more specifically described with reference to examples below, but the present disclosure is not limited to the examples below as long as a departure from the gist of the present disclosure does not occur. Unless otherwise specified, "parts" and "%" below are based on mass.

Prior to the examples, the following components were prepared.

EVOH

- EVOH (A1): Ethylene unit content of 29 mol%, MFR (at 210°C and a load of 2160 g) of 3.8 g/10 minutes, degree of saponification of 99.9 mol%

- EVOH (A2): Ethylene unit content of 44 mol%, MFR (at 210°C and a load of 2160 g) of 3.5 g/10 minutes, degree of saponification of 99.9 mol%

Polypropylene Resin

- Carbon-14-containing polypropylene (B1): carbon-14-containing polypropylene (HP640J, available from Lyondell-Basell Industries N.V), MFR (at 230°C and a load of 2160 g) of 3.2 g/10 min, biobased content of 40%
- Petroleum-derived polypropylene (B'1): polypropylene (FY6, available from Japan Polypropylene Corporation), MFR (at 230°C and a load of 2160 g) of 2.4 g/10 min

Example 1

90 parts of EVOH (A1) and 10 parts of carbon-14-containing polypropylene (B1) were mixed together all at once by dry blending. The mixture was then fed to a twin-screw kneader at a rate of 8 kg/hour using a mass-type feeder, after which the mixture was strand-cut with a drum pelletizer, and thereby a resin composition was prepared in the form of pellets. The kneading conditions were as follows.

Kneading Conditions

- Twin-screw extruder: diameter of 20 mm, L/D = 48 (available from Shibaura Machine Co., Ltd.)
- Extruder temperature setting: C1/C2/C3/C4/C5/C6/H = 170/200/210/210/210/210/210
- Screw rotational speed: 250 rpm
- Take-up speed: 12 m/min

Examples 2 to 4, Comparative Examples 1 to 4

Resin compositions of Examples 2 to 4 and Comparative Examples 1 to 4 were prepared in the same manner as in Example 1 with the exception that the type and blending amount of each component were changed as described in Table 1 below.
The obtained resin compositions of Examples 1 to 4 and Comparative Examples 1 to 4 were subjected to the following thermal stability evaluation. The results are presented in Table 1 below.

Thermal Stability Evaluation

Reduction Temperature Difference

The mass loss percentage of 5 mg of each of the obtained pelletshaped resin compositions when the temperature was increased at a rate of 10°C/min under a nitrogen atmosphere was measured using a thermogravimetric analyzer (Pyris 1 TGA, available from PerkinElmer Inc.). Subsequently, a value (reduction temperature difference) obtained by subtracting the temperature when a 5% mass reduction of the resin composition occurred from the temperature when a 10% mass reduction of the resin composition occurred was determined. A higher value determined means that the decomposition of the resin composition is slower, and that the resin composition has excellent thermal stability.

Thermal Stability Improvement Rate

The thermal stability improvement percentage was determined from the following equation with the value of the reduction temperature difference of the comparative example corresponding to each example (for example, the comparative example corresponding to Example 1 is Comparative Example 1) being 100.

Thermal stability improvement percentage (%) = (value of (reduction temperature difference of Example)/(reduction temperature difference of Comparative Example corresponding to Example) $\times$ 100) - 100

(The thermal stability improvement percentage (%) is rounded off to the nearest whole number.)

Table 1

| | Resin Composition | | | Thermal Stability Evaluation | |
|---|---|---|---|---|---|
| | Type of EVOH (A) | Type of Polypropylene Resin (B) | Compositional Ratio [(A)/(B)] (mass ratio) | Reduction Temperature Difference (°C) | Thermal Stability Improvement Percentage (%) |
| Example 1 | A1 | B1 (Containing carbon-14) | 90/10 | 23.6 | 14 |
| Example 2 | A1 | B1 (Containing carbon-14) | 50/50 | 21.0 | 20 |
| Example 3 | A2 | B1 (Containing carbon-14) | 50/50 | 19.2 | 14 |
| Example 4 | A1 | B1 (Containing carbon-14) | 10/90 | 13.1 | 21 |
| Comparative Example 1 | A1 | B'1 (Petroleum) | 90/10 | 20.7 | - |
| Comparative Example 2 | A1 | B'1 (Petroleum) | 50/50 | 17.5 | - |
| Comparative Example 3 | A2 | B'1 (Petroleum) | 50/50 | 16.8 | - |
| Comparative Example 4 | A1 | B'1 (Petroleum) | 10/90 | 10.8 | - |

From the results presented in Table 1, it is clear that the thermal stabilities of the resin compositions of Examples 1 to 4 that used the carbon-14-containing polypropylene (B1) are improved as compared with the resin compositions of Comparative Examples 1 to 4 that used the petroleum-derived polypropylene (B'1). The reason for this is thought to be that the carbon-14-containing polypropylene has a stronger binding energy due to the primary isotope effect, leading to slowed decomposition and increased thermal stability.

Furthermore, from Examples 1 to 4 and Comparative Examples 1 to 4, it is clear that the effect of the present disclosure of an excellent thermal stability is similarly obtained even when the blending ratio of each component is changed.

The molded bodies, sheets, films, bottles, tubes, and containers containing the resin compositions of Examples 1 to 4, and the multilayer structures including a layer containing the resin compositions of Examples 1 to 4 also exhibited excellent thermal stability.

Specific embodiments of the present disclosure were described in the above examples, but the above examples are merely illustrative and are not to be construed as limiting. Various modifications apparent to those skilled in the art are intended to be within the scope of the present disclosure.

Industrial Applicability

The present resin composition can increase thermal stability to a level higher than that of a resin composition containing a petroleum-derived polypropylene. Therefore, a molded body formed from the present resin composition and a multilayer structure including a layer containing the present resin composition are useful as materials for various packaging containers.

**Claims**

1.    A resin composition comprising an ethylene-vinyl alcohol copolymer (A) and a carbon-14-containing polypropylene resin (B).

2.    The resin composition according to claim 1, wherein a mass ratio [(A)/(B)] of the ethylene-vinyl alcohol copolymer (A) to the carbon-14 containing polypropylene resin (B) is from 10/90 to 99/1.

3. The resin composition according to claim 1 or 2, wherein a content of the ethylene-vinyl alcohol copolymer (A) is from 10 to 99 mass% in relation to a total amount of the resin composition.

4. The resin composition according to claim 1 or 2, wherein a content of the carbon-14-containing polypropylene resin (B) is from 1 to 90 mass% in relation to the total amount of the resin composition.

5. A molded body comprising the resin composition according to claim 1 or 2.

6. A sheet comprising the resin composition according to claim 1 or 2.

7. A film comprising the resin composition according to claim 1 or 2.

8. A bottle comprising the resin composition according to claim 1 or 2.

9. A tube comprising the resin composition according to claim 1 or 2.

10. A container comprising the resin composition according to claim 1 or 2.

11. A multilayer structure comprising a layer comprising the resin composition according to claim 1 or 2.

12. A method for producing a resin composition, the method comprising mixing an ethylene-vinyl alcohol copolymer (A) and a carbon-14-containing polypropylene resin (B).

## INTERNATIONAL SEARCH REPORT

| | International application No. |
|---|---|
| | **PCT/JP2024/012297** |

| A. | CLASSIFICATION OF SUBJECT MATTER |
|---|---|

*C08L 23/26*(2006.01)i; *B32B 27/28*(2006.01)i; *C08L 23/12*(2006.01)i
FI:   C08L23/26; C08L23/12; B32B27/28 102

According to International Patent Classification (IPC) or to both national classification and IPC

| B. | FIELDS SEARCHED |
|---|---|

Minimum documentation searched (classification system followed by classification symbols)

C08L23/26; B32B27/28; C08L23/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/193317 A1 (MITSUBISHI CHEMICAL CORPORATION) 30 September 2021 (2021-09-30) <br> claims, examples | 1-12 |
| A | JP 10-330533 A (KURARAY CO., LTD.) 15 December 1998 (1998-12-15) <br> claims, examples | 1-12 |
| A | JP 2022-034771 A (MITSUI CHEMICALS, INC.) 04 March 2022 (2022-03-04) <br> claims, examples | 1-12 |
| A | CN 109320846 A (ANHUI JINRAN PLASTIC CEMENT TECHNOLOGY DEVELOPMENT CO., LTD.) 12 February 2019 (2019-02-12) <br> claims, examples | 1-12 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 June 2024** | **11 June 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/012297**

| Patent document cited in search report | | | Publication date (day/month/year) | Patent family member(s) | | | Publication date (day/month/year) |
|---|---|---|---|---|---|---|---|
| WO | 2021/193317 | A1 | 30 September 2021 | US | 2023/0019812 | A1 | |
| | | | | claims, examples | | | |
| | | | | EP | 4130159 | A1 | |
| | | | | CN | 115335463 | A | |
| JP | 10-330533 | A | 15 December 1998 | (Family: none) | | | |
| JP | 2022-034771 | A | 04 March 2022 | (Family: none) | | | |
| CN | 109320846 | A | 12 February 2019 | (Family: none) | | | |

Form PCT/ISA/210 (patent family annex) (July 2022)

**REFERENCES CITED IN THE DESCRIPTION**

**Patent documents cited in the description**

- JP 2022034771 A

- JP 2016150949 A